# EUROPEAN PATENT APPLICATION

(11) **EP 1 932 779 A1**
(43) Date of publication of application: **18.06.2008**
(21) Application number: 05788079.1
(22) Date of filing: 03.10.2005
(51) Int. Cl.: B65G 1/04, E04H 6/30

(54) **TRAY TRANSFER MECHANISM AND ARTICLE STORING APPARATUS USING SAME**

(71) Applicant: NISSEI LIMITED, Tokyo (JP)
(72) Inventor: ISHIJIMA, Takeo, Ryuugasaki-shi, Ibaraki 301-0041 (JP)
(74) Representative: Grünecker, Kinkeldey, Stockmair & Schwanhäusser Anwaltssozietät
(86) International application number: PCT/JP2005/018276
(87) International publication number: WO 2007/043129

(57) **Abstract**

A tray transfer mechanism is provided which is configured with a largely reduced number of parts to enable a large cost reduction. The tray transfer mechanism allows a tray transfer direction to be changed by 90 degrees with ease and a tray to be transferred smoothly. For this, the tray transfer mechanism uses a switching unit which makes switching to cause a lateral rack of the tray to be engaged with a toothed belt transmission member of a lateral tray transfer device so that driving the lateral tray transfer device transfers the tray laterally or to cause a longitudinal rack of the tray to be engaged with a toothed belt transmission member of a longitudinal tray transfer device. Thus, driving the longitudinal tray transfer device transfers the tray longitudinally.

## Description

### BACKGROUND OF THE INVENTION

### Field of the Invention

The present invention relates to a tray transfer mechanism used to transfer trays each carrying an article in, for example, various types of mechanical parking systems and automated warehousing systems for storing various articles and an article storing apparatus using the same.

### Description of the Related Arts

There have been various article storing apparatuses, particularly, puzzle-type planar circulation parking systems in which plural trays each for carrying a car are arranged in a matrix formation in a parking space at a car storing level (with the matrix formation including at least one empty tray-less space) and in which the plural trays can each be transferred, using a tray transfer mechanism, in four directions, i.e. forward, backward, leftward, and rightward, or in two directions, i.e. forward and backward only or leftward and rightward only. An example of such a tray transfer mechanism is described in JP-A-63-74804.

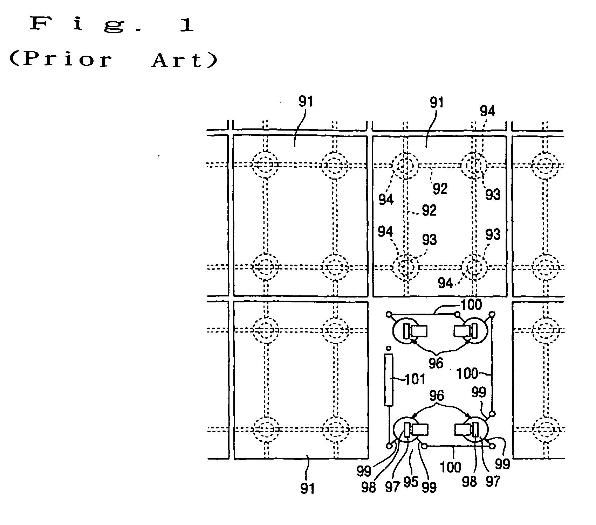

In the tray transfer mechanism (transfer apparatus), shown in FIG. 1, each of trays 91 is provided, on its underside, with double-crossed rails 92 extending in lateral and longitudinal directions. At each of the intersections between the lateral and longitudinal rails 92, a disc 93 having a short rail 94 is rotatably installed. On the floor portion opposing the underside of each tray 91, i.e. in each tray parking space 95, there are four tray drive devices 96 provided at four locations corresponding to where the four discs 93 are attached to the tray 91. The tray drive devices 96 each include a disc 97 rotatably attached to the floor portion, a motor-driven drive wheel 98 provided on the disc 97 to be projecting on the floor portion, and guide rollers (not illustrated) which, when the rails 92 or short rails 94 of the tray 91 travel over the motor-driven drive wheels 98, guide the tray 91 along the course of transfer by staying in contact with side surfaces of the rails 92 or 94. The four discs 97 are each provided with two projecting arms 99. Three rods 100 are pivotally fitted to the arms 99 attached to the four discs 97. The four discs 97 provided in each tray parking space 95 are inter-linked with the three rods 100. A cylinder 101 is pivotally fitted to one of the arms 99 projecting from one of the discs 97.

To transfer the tray 91 parked in a tray parking space 95 to an empty tray parking space 95 using the tray transfer apparatus provided in the tray parking space 95 where the tray 91 is parked, the cylinder 101 of the tray transfer apparatus is driven to direct the four drive wheels 98 provided on the four discs 97 toward the empty tray parking space 95. When the four drive wheels 98 are directed toward the empty tray parking space 95, the short rails 94 attached to the tray 91 staying on the four drive wheels 98 are also directed toward the empty tray parking space 95. When, in this state, the four drive wheels 98 are driven, the tray 91 is driven toward the empty tray packing space 95. In this way, the tray 91 can be driven forward, backward, leftward, or rightward so that it can reach the destination.

The existing type of tray transfer mechanism as described above, however, requires, for each tray parking space, four drive devices which include four discs, four drive motors, four drive wheels, and four sets of guide rollers, a cylinder for swiveling the four drive devices simultaneously, and eight arms and three rods required to make up a link mechanism. Namely, the tray transfer mechanism requires many parts, complicating its manufacturing process and installation adjustment and making a cost reduction difficult. Furthermore, to change the direction of tray transfer by 90 degrees, the direction in which the four drive wheels are aligned is directly changed by 90 degrees. In this way, the four drive wheels attached to the tray carrying a car are subjected to a heavy load. This makes it difficult to maintain the tray in a stable condition when it carries a loaded car and when it carries an empty car. Furthermore, when the tray fails to stop accurately at a correct parking position in the tray parking space, the load on the drive wheels increases making smooth operation of the tray transfer mechanism difficult.

### SUMMARY OF THE INVENTION

The present invention has been made to address the above problems, and it is an object of the invention to provide a tray transfer mechanism and an article storing apparatus using the same, which can be used in mechanical parking systems of the above described type and other types of article storing apparatuses, which, having a simple configuration, can largely reduce the number of required parts and simplify its manufacturing process and installation adjustment to realize a large cost reduction, and in which the direction of tray transfer can be changed by 90 degrees in a simple way allowing each tray to be transferred stably and smoothly regardless of whether the tray is carrying a loaded car or an empty car or regardless of whether or not an article is placed on the tray.

To address the above problems, the present invention provides a tray transfer mechanism which includes plural trays on each of which an article can be placed and a tray drive device which stores or transfers the trays on a plane, the tray transfer mechanism circulating the trays on the plane. In the tray transfer mechanism: each of the trays is provided with a laterally extending rack and a longitudinally extending rack; the tray drive device includes a lateral tray transfer device having a toothed belt transmission member which, engaging the laterally extending rack of each of the trays, laterally drives the tray, a longitudinal tray transfer device having a toothed belt transmission member which, engaging the longitudinally extending rack of each of the trays, longitudinally drives the tray, and a tray transfer direction switching device which alternately performs an operation to switch the lateral tray transfer device between an engageable position where the toothed belt transmission member of the lateral tray transfer device can engage the laterally extending rack of each of the trays and a disengageable position where the toothed belt transmission member of the lateral tray transfer device can disengage from the laterally extending rack of each of the trays and another operation to switch the longitudinal tray transfer device between an engageable position where the toothed belt transmission member of the longitudinal tray transfer device can engage the longitudinally extending rack of each of the trays and a disengageable position where the toothed belt transmission member of the longitudinal tray transfer device can disengage from the longitudinally extending rack of each of the trays; and each of the trays is driven laterally or longitudinally by engaging selectively the laterally extending rack of each of the trays with the lateral tray transfer device or the longitudinally extending rack of each of the trays with the longitudinal tray transfer device.

In the tray transfer mechanism, each of the lateral tray transfer device and the longitudinal tray transfer device is preferably provided with elastic supporting means which elastically supports the toothed belt transmission member thereof toward the laterally extending rack or longitudinally extending rack of each of the trays.

In the tray transfer mechanism, the tray transfer direction switching device is preferably configured as a single switching unit including: a supporting member on a first end portion of which the lateral tray transfer device is disposed and on a second end portion of which the longitudinal tray transfer device is disposed; pivotal supporting means which tiltably supports the supporting member; elastic supporting means which continuously elastically supports, in a first direction, the supporting member such that the toothed belt transmission member of one of the lateral tray transfer device and the longitudinal tray transfer device can engage one of the laterally extending rack and the longitudinally extending rack of each of the trays; and press-tilting means which can press and tilt the supporting member in a second direction to allow the toothed belt transmission member of the other of the lateral tray transfer device and the longitudinal tray transfer device to engage the other of the laterally extending rack and the longitudinally extending rack of each of the trays. The press-tilting means may include a drive motor and an eccentric wheel eccentrically fixed to a rotary shaft of the drive motor.

Alternatively, the tray transfer direction switching device may include separate switching units for the lateral tray transfer device and the longitudinal tray transfer device, the separate switching units being arranged such that, when the toothed belt transmission member of one of the lateral tray transfer device and the longitudinal tray transfer device is engaged with one of the laterally extending rack and the longitudinally extending rack of each of the trays, the toothed belt transmission member of the other of the lateral tray transfer device and the longitudinal tray transfer device is disengaged from the other of the laterally extending rack and the longitudinally extending rack.

The invention also provides an article storing apparatus using the above tray transfer mechanism. In the article storing apparatus, plural trays arranged in a matrix formation including plural partitions are circulated on a plane, the plural partitions including at least one empty partition.

The tray transfer mechanism according to the invention and the article storing apparatus using the same are configured as described above. These mechanism and apparatus do not employ an existing configuration in which a tray drive device is directly horizontally swiveled, so that, compared with existing mechanisms and apparatuses, they can each use a simpler configuration with a largely reduced number of parts. Hence, their manufacturing processes and installation adjustment can be simplified to realize a large cost reduction. In the tray transfer mechanism according to the invention and the article storing apparatus using the same, the tray transfer direction switching device makes switching so that the lateral rack of the tray to be laterally transferred is engaged with and laterally driven by the toothed belt transmission member of the lateral tray transfer device and so that the longitudinal rack of the tray to be longitudinally transferred is engaged with and longitudinally driven by the toothed belt transmission member of the longitudinal tray transfer device. In this way, the direction of tray transfer can be easily changed by 90 degrees so that the tray can be transferred stably and smoothly regardless of whether the tray is carrying a loaded car or an empty car or regardless of whether or not a car or any other article is placed on the tray.

### BRIEF DESCRIPTION OF THE DRAWINGS

FIG. 1 is a plan view of an existing tray transfer mechanism;
FIG. 2A is a side view showing a configuration of a tray transfer mechanism according to an embodiment of the invention, and FIG. 2B is a plan view of the configuration of the tray transfer mechanism;
FIG. 3 is a side view showing a configuration of a toothed belt transmission member used in the tray transfer mechanism according to the embodiment;
FIG. 4 is a plan view of the configuration of the toothed belt transmission member used in the tray transfer mechanism according to the embodiment;
FIG. 5A is a front view showing a configuration of a press-tilting means used in the tray transfer mechanism according to the embodiment, and FIG. 5B is a side view of the configuration of the press-tilting means used in the tray transfer mechanism according to the embodiment;
FIG. 6A is a plan view showing a modification of a tray drive device used in the tray transfer mechanism according to the embodiment, and FIG. 6B is a plan view partly showing a configuration of the modification of the tray drive device used in the tray transfer mechanism according to the embodiment;
FIG. 7A is a plan view showing a configuration of a tray guide used in the tray transfer mechanism according to the embodiment, and FIG. 7B is a longitudinal cross-sectional view of the configuration of the tray guide used in the tray transfer mechanism according to the embodiment;
FIG. 8A is a partly omitted plan view showing a modification of the tray guide (position correcting guides) used in the tray transfer mechanism according to the embodiment, and FIG. 8B is a partly omitted cross-sectional view showing the modification of the tray guide (position correcting guides) used in the tray transfer mechanism according to the embodiment; and
FIG. 9 is a partly omitted plan view of an article storing apparatus (puzzle-type planar circulation parking system) using the tray transfer mechanism according to the embodiment.

### DETAILED DESCRIPTION OF THE PREFERRED EMBODIMENT

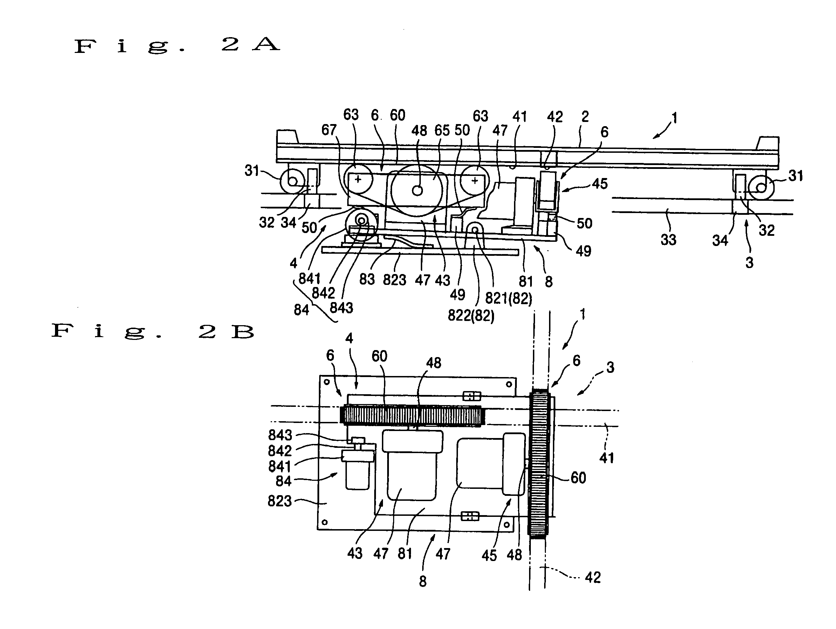

FIGS. 2A and 2B to FIG. 9 show an embodiment of the present invention. Referring to FIGS. 2A and 2B, a tray transfer mechanism 1 includes plural trays 2 each for carrying an article, a tray guide 3 which individually guides the trays 2 moving laterally or longitudinally on a (flat) horizontal surface for storing or transferring articles, and a tray drive device 4 which individually drives and transfers the trays 2.

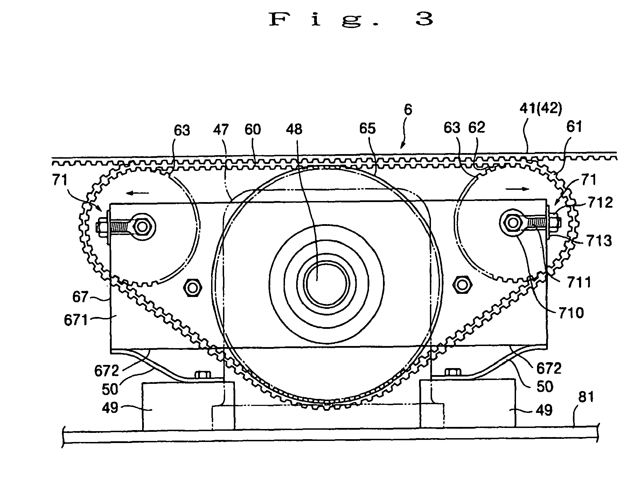

The trays 2 are each formed of a vertically-long rectangular plate having a flat surface on which an article can be stably placed. The tray 2 shown in FIG. 2A is a car carrying tray for use in a mechanical parking system. It has a flat surface over which a car can move and both sides of which are outwardly and upwardly projecting. The tray 2 need not necessarily be rectangular. It may be shaped differently, for example, squarely or circularly as required according to the shape of the article to be carried. The tray 2 is provided with a set of four rollers 31 for rolling in a lateral direction and a set of four rollers 32 for rolling in a longitudinal direction, the rollers 31 and 32 being included in the tray guide 3. The four rollers 31 for lateral rolling are rollably supported, each via a cushion (not illustrated), in four corner portions of the underside of the tray 2, respectively. The four rollers 32 for longitudinal rolling are rollably supported, each via a cushion, inwardly of and closely to the four rollers 31 for lateral rolling, respectively. The four rollers 31 for lateral rolling and four rollers 32 for longitudinal rolling, totaling eight, are elastically pressed, by the repulsion forces of the corresponding cushions, against lateral rails 33 and longitudinal rails 34, respectively, which are included in the tray guide 3 and which will be described in detail later. In this configuration, the rollers 31 and 32 being kept pressed against the rails 33 and 34, respectively, are prevented from rolling idly, so that they can serve to transfer the tray 2 normally. Even though, in the present embodiment, one each of the rollers 31 for lateral rolling and one each of the rollers 32 for longitudinal rolling are provided in each of the four underside corner portions of the tray 2, more than one each of the rollers 31 and more than one each of the rollers 32 may be provided in each of the four underside corner portions of the tray 2 as required. The tray 2 is also provided with a lateral rack 41 and a longitudinal rack 42. The lateral rack 41 laterally extends approximately side to side on the underside of the tray 2. The longitudinal rack 42 longitudinally extends approximately end to end on the underside of the tray 2. A middle portion of each of the lateral rack 41 and the longitudinal rack 42 is cut out to be discontinuous, so that the two racks do not actually cross each other. The racks 41 and 42 are each formed of a plastic material. Each of them has, as shown in FIG. 3, plural trapezoidal teeth formed at a uniform pitch on its underside surface.

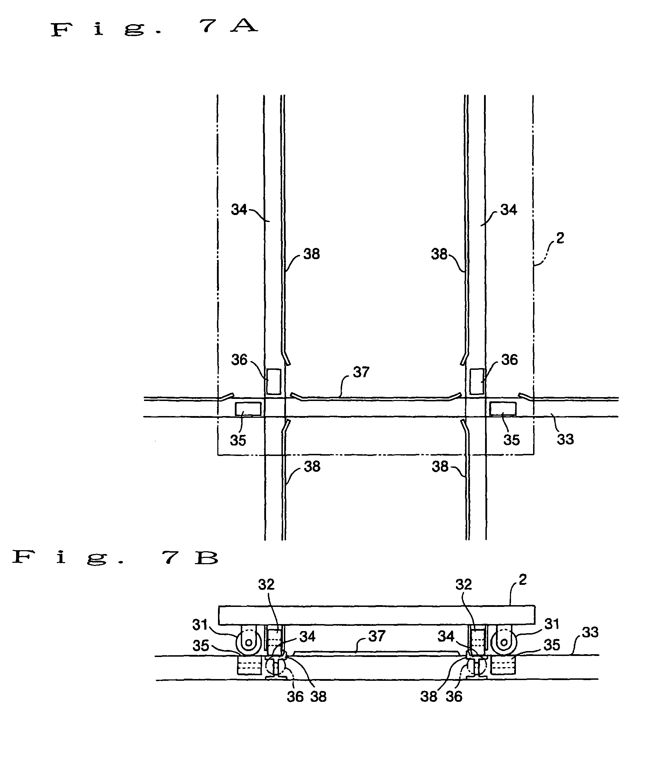

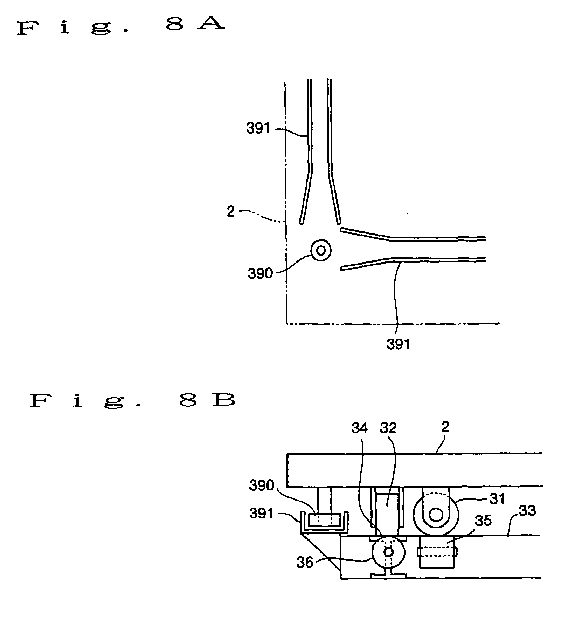

The tray guide 3, shown in FIGS. 2A and 2B, includes the eight rollers, i.e. the four rollers 31 and the four rollers 32 attached to the tray 2, and the plural lateral rails 33 and longitudinal rails 34 provided on a horizontal surface for storing or transferring articles. The eight rollers 31 and 32 have been described above. Referring to FIGS. 7A and 7B, the lateral rails 33 are a pair of front and rear rails made of, for example, channel steel, each having a flat top on which the corresponding lateral rollers 31 of the tray 2 can travel rolling. They are laterally laid on a horizontal surface to be apart from each other by a distance smaller than the length of the tray 2. In cases where a lift is installed on the paired lateral rails 33, the paired lateral rails 33 are partly cut out to form a passage through which the lift can be moved up and down. The longitudinal rails 34 are a pair of left and right rails made of, for example, channel steel, each having a flat top on which the corresponding longitudinal rollers 32 can travel rolling. They are longitudinally laid on a horizontal surface to be apart from each other by a distance smaller than the width of the tray 2. In cases where a lift is installed on the paired longitudinal rails 34, the paired longitudinal rails 34 are partly cut out to form a passage through which the lift can be moved up and down. The lateral rails 33 rotationally support, at their respective portions near the longitudinal rails 34 (i.e. at their portions respectively corresponding to the left and right lateral rollers 31 of the tray 2 that moves over the longitudinal rails 34), supporting rollers 35 provided as supporting members to support the tray 2 (more concretely, to support the corresponding lateral rollers 31). The supporting rollers 35 each have a rotary shaft oriented along the direction in which the lateral rails 33 extend. The longitudinal rails 34 rotationally support, at their respective portions near the lateral rails 33 (i.e. at their portions respectively corresponding to the front and rear longitudinal rollers 32 of the tray 2 that moves over the lateral rails 33), supporting rollers 36 provided as supporting members to support the tray 2 (more concretely, to support the corresponding longitudinal rollers 32). The supporting rollers 36 each have a rotary shaft oriented along the direction in which the longitudinal rails 34 extend. The top surfaces, on which the lateral and longitudinal rollers 31 and 32 travel, of the lateral and longitudinal rails 33 and 34, and the apexes of the supporting rollers 35 and 36 are aligned at the same level. The lateral and longitudinal rails 33 and 34 are also provided with lateral and longitudinal position correcting guides 37 and 38, respectively, for keeping the tray 2 in the lateral and longitudinal transfer directions, respectively. The lateral position correcting guides 37 are installed along the lateral rails 33, respectively. The lateral position correcting guides 37 are rails engageable with the lateral rollers 31 attached to the underside of the tray 2. Each of the lateral position correcting guides 37 is installed adjoining one side of one of the lateral rails 33 and projecting to a predetermined height above the roller-traveling top surface of the one of the lateral rails 33. Each of the lateral position correcting guides 37 is partly cut out forming plural rail segments so that it is discontinuous at its portions across which the rollers 31 and 32 of the tray 2 pass. End portions of the rail segments forming the discontinuous portions of each of the lateral position correcting guides 37 are slightly bent outward with respect to the corresponding one of the lateral rails 33. The longitudinal position correcting guides 38 are installed along the longitudinal rails 34, respectively, to keep the tray 2 in the longitudinal transfer direction when it is being transferred longitudinally. The longitudinal position correcting guides 38 are rails engageable with the longitudinal rollers 32 attached to the underside of the tray 2. Each of the longitudinal position correcting guides 37 is installed adjoining one side of one of the longitudinal rails 34 and projecting to a predetermined height above the roller-traveling top surface of the one of the longitudinal rails 34. Each of the longitudinal position correcting guides 38 is partly cut out forming plural rail segments so that it is discontinuous at its portions across which the rollers 31 and 32 of the tray 2 pass. End portions of the rail segments forming the discontinuous portions of each of the longitudinal position correcting guides 38 are slightly bent outward with respect to the corresponding one of the longitudinal rails 34. This configuration allows the tray 2 to be reliably transferred laterally or longitudinally with the lateral rollers 31 or longitudinal rollers 32 of the tray 2 securely guided along the (inner-side) rail surfaces of the lateral position correcting guides 37 or longitudinal position correcting guides 38 without hitting any end portion of any rail segment of the lateral position correcting guides 37 or longitudinal position correcting guides 38. The lateral and longitudinal position correcting guides 37 and 38 may also be configured with roller members 390 and rail members 391 as shown in FIGS. 8A and 8B . In this configuration, the roller members 390 are horizontally rotatably attached to one of the tray 2 and the horizontal surface for storing or transferring articles. The rail members 391 are attached to the other of the tray 2 and the horizontal surface for storing or transferring articles such that they can sandwichingly hold the roller members 390. For example, when the roller members 390 are to be attached to the tray 2, each of them is horizontally rotatably supported at each of two underside end portions of the tray 2 (or one of them at an underside end portion of the tray 2 and two of them at the other underside end portion of the tray 2). The rail members 391 are formed to be taperingly widened in their end portions. They are laid such that they are adjacent to the lateral rails 33 and longitudinal rails 34 at every parking position for the tray 2 or at, out of all parking positions for the tray 2, particular parking positions where the tray 2 changes the transfer direction from lateral to longitudinal or vice versa and such that their positions correspond to the positions of the roller members 390 attached to the underside of the tray 2. In this configuration, the widened rail end portions formed by the rail members 391 laid to extend laterally or longitudinally allow the roller members 390 attached to the underside of the tray 2 to slide into linear passages formed by the rail members 391, so that the tray 2 can be reliably transferred laterally or longitudinally. As described above, transfer routes for the tray 2 for use, for example, in a mechanical parking system or automated warehousing system can be formed by arbitrarily combining the lateral rails 33 and longitudinal rails 34.

Even though, in this embodiment, the lateral and longitudinal rollers 31 and 32 are attached to the underside of the tray 2 with the lateral and longitudinal rails 33 and 34 provided on the horizontal surface for storing or transferring articles, the configuration may be changed such that the lateral and longitudinal rails 33 and 34 are attached to the underside of the tray 2 with the lateral and longitudinal rollers 31 and 32 provided on the horizontal surface for storing or transferring articles.

Referring to FIGS. 2A and 2B, the tray drive device 4 includes: a lateral tray guide 3; a lateral tray transfer device 43 which is, in the present embodiment, provided along the lateral rails 33, which engages the lateral rack 41 of the tray 2, and which has a toothed belt transmission member 6 to laterally drive the tray 2; a longitudinal tray guide 3; a longitudinal tray transfer device 45 which is, in the present embodiment, provided along the longitudinal rails 34, which engages the longitudinal rack 42 of the tray 2, and which has a toothed belt transmission member 6 to longitudinally drive the tray 2; and a tray transfer direction switching device 8 which alternately performs two operations. In one of the two operations, the tray transfer direction switching device 8 switches the lateral tray transfer device 43 between an engageable position where the toothed belt transmission member 6 of the lateral tray transfer device 43 can engage the lateral rack 41 of the tray 2 and a disengageable position where the toothed belt transmission member 6 of the lateral tray transfer device 43 can disengage from the lateral rack 41 of the tray 2. In the other of the two operations, the tray transfer direction switching device 8 switches the longitudinal tray transfer device 45 between an engageable position where the toothed belt transmission member 6 of the longitudinal tray transfer device 45 can engage the longitudinal rack 42 of the tray 2 and a disengageable position where the toothed belt transmission member 6 of the longitudinal tray transfer device 45 can disengage from the longitudinal rack 42 of the tray 2.

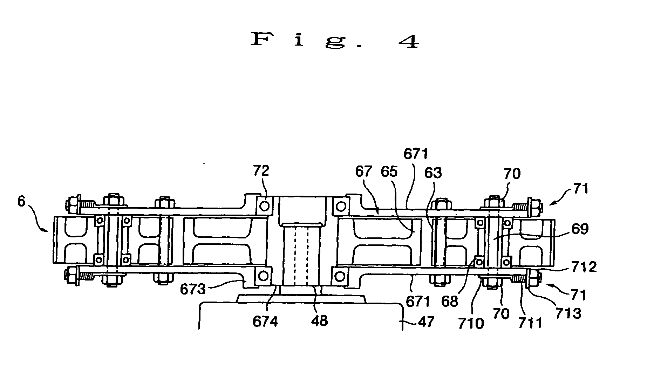

The toothed belt transmission members 6 included in the lateral tray transfer device 43 and longitudinal tray transfer device 45 of the tray drive device 4 have a common configuration. They each include, as shown in FIGS. 3 and 4, a timing belt 60 having teeth 61 and 62 formed on its outer and inner sides, respectively, plural pulleys 63 and 65 which engage the teeth 62 formed on the inner side of the timing belt 60, which rotationally drive the timing belt 60, and which horizontally guide at least, out of upper and lower running portions of the timing belt 60, the upper running portion, and a frame 67 combining these parts into a unit. The teeth 61 and 62 formed on the outer and inner sides of the timing belt 60 are trapezoidally shaped and have the same pitch. The teeth 61 on the outer side of the timing belt 60 are formed to be engageable with the lateral and longitudinal racks 41 and 42 of the tray 2. The teeth 62 formed on the inner side of the timing belt 60 are formed to be engageable with the pulleys 63 and 65 as being described later. The timing belt 60 is engagingly wound around and rotationally driven by three pulleys, i.e. a pair of the relatively small driven pulleys 63 and the larger drive pulley 65 positioned between the driven pulleys 63. The frame 67 includes a pair of main plates 671 each having an extended substantially rectangular or elliptical shape and a pair of sub-plates 672 linking lower portions of the two main plates 671. The two driven pulleys 63 are rotatably supported between upper longitudinal-end portions of the two main plates 671. The drive pulley 65 is rotatably supported, between lower longitudinal-middle portions of the two main plates 671, by the rotary shaft of a drive motor 47 provided with a reducer. The two driven pulleys 63 and the drive pulley 65 are linearly arranged with their highest portions aligned at the same height. The timing belt 60 is wound around the three pulleys, i.e. the two driven pulleys 63 and the drive pulley 65, with its upper span horizontally linearly stretching and its lower span stretching substantially in a V-shape. The two driven pulleys 63 are each rotatably supported between the two main plates 671 via bearings 68, a bolt 69, and two nuts 70. The two driven pulleys 63 are positioned between the two main plates 671 such that they can be shifted toward or away from the drive pulley 65 as required to adjust the tension of the timing belt 60. To shift the positions of the two driven pulleys 63, four adjusting members 71 provided in four end portions of the two main plates 671 are used. The adjusting members 71 each include a ring 710 which can be fitted to the bolt 69, a threaded shaft 711 which is integral with the ring 710, and a nut 712 screwed to the shaft 711. A fixing member 713 which is a small plate-like part having a through-hole for inserting a shaft is attached to each of four edge portions of the two main plates 671, facing outward in the longitudinal direction of the main plates 671. The fixing member 713 is, in a state where the ring 710 is placed between the main plate 671 and the nut 70, linked to the bolt 69. The shaft 711 is inserted through the through-hole formed in the fixing member 713 attached to the main plate 671, and the nut 712 is screwed to the shaft 711. In this configuration, when the nut 712 is tightened, the shaft 711 linked to the bolt 69 is screwed outwardly of the outer edge of the main plate 671 causing the bolt 69 to be displaced in the same direction. The driven pulley 63 on each side can therefore be displaced outwardly of the outer edges on the same side of the main plates 671 by tightening the two nuts 712 on the same side of the main plates 671. Conversely, when the nut 712 is loosened, the shaft 711 is screwed inwardly of the outer edge of the main plate 671 causing the bolt 69 to be displaced in the same direction. The driven pulley 63 on each side can therefore be displaced inwardly of the outer edges on the same side of the main plates 671 by loosening the two nuts 712 on the same side of the main plates 671. Thus, the tension of the timing belt 60 can be adjusted by displacing the two driven pulleys 63 outwardly or inwardly using the nuts 712. With this belt tension adjustment taken into consideration, it is appropriate to fix the driven pulleys 63 to the frame 67 by tightening the nuts 70 threaded to the bolts 69 after the tension of the timing belt 60 is adjusted, i.e. after the positions of the two driven pulleys 63 are adjusted. The drive pulley 65 is held between the two main plates 671 via bearings 72. Each of the main plates 671 has a retainer section 673 formed in its central portion. The retainer section 673 is outwardly elevated, so that the cross-sectional view, shown in FIG. 4, of the main plate 671 is approximately L-shaped on each side of the central portion. The retainer section 673 has a through-hole 674 through which a rotary shaft 48 of the drive motor 47 is inserted. The bearings 72 are fitted in the elevated retainer sections 673 of the main plates 671 with the drive pulley 65 held between the main plates 671 via the bearings 72. The two driven pulleys 63 and the drive pulley 65 are integrally assembled, as a pulley unit, to the frame 67 as described above. The rotary shaft 48 of the drive motor 47 is inserted through the through-hole 674 provided in a central portion of the frame 67 holding the pulley unit, causing the rotary shaft 48 of the drive motor 47 and the drive pulley 65 to be coupled. The pulley unit and the drive motor 47 are mounted, as the lateral tray transfer device 43 or longitudinal tray transfer device 45, on the horizontal surface for storing or transferring articles under control of the tray transfer direction switching device 8. In the configuration, the drive motor 47 is disposed on the tray transfer direction switching device 8 together with a pair of supporting members 49 which are disposed on both sides of the drive motor 47. Elastic supporting means, that is, a plate spring 50 in the present embodiment, is provided between the supporting member 49 on each side and the sub-plate 672 on the corresponding side of the frame 67 holding the pulley unit. The plate springs 50 elastically support the pulley unit biasing the pulley unit toward the lateral rack 41 or longitudinal rack 42 of the tray 2. The plate springs 50 are required to have a spring force strong enough to make up for possible tilting/deformation of the tray 2 carrying an article. With the plate springs 50 provided between the frame 67 holding the pulley unit and the supporting members 49, the toothed belt transmission member 6 is pushed upwardly from below, so that the toothed belt transmission member 6 can securely engage the lateral rack 41 or longitudinal rack 42 of the tray 2. In this configuration, the toothed belt transmission member 6 desirably engages the lateral rack 41 or longitudinal rack 422 of the tray 2 over a length (i.e., the length of the upper span of the timing belt 60) equal to at least one quarter of the distance between two trays 2 adjacently arranged on the horizontal surface for storing or transferring articles. In the present embodiment, the engagement length is set approximately equal to one half of the distance between two longitudinally adjacent trays 2.

Even though, in the tray drive device 4 of the present embodiment, the toothed belt transmission members 6 included in the lateral tray transfer device 43 and the longitudinal tray transfer device 45 each have the three pulleys, the number of pulleys may be two instead of three, i.e. a drive pulley and a driven pulley. When the number of pulleys is two, it is preferable to employ a belt guide bar (a plate-like belt guide) or belt guide wheels (a belt guide made up of one or more wheels) which, supporting the timing belt, guide the timing belt so that the teeth formed on the outer side of the timing belt securely engage the opposing rack of the tray. These parts are, as described in the foregoing, assembled to a frame as a unit, and the timing belt is wound around the drive pulley, the belt guide, and the driven pulley. This toothed belt transmission member can also be installed, together with a drive motor, in the tray transfer direction switching device basically in the same manner as described above.

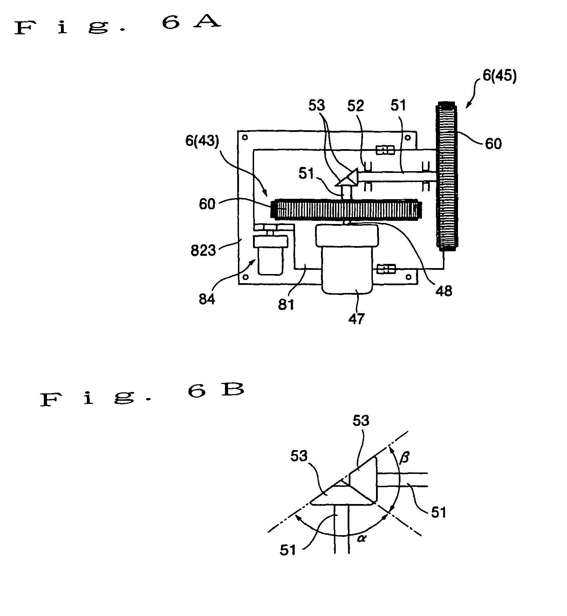

Even though, in the tray drive device 4 of the present embodiment, the lateral tray transfer device 43 and the longitudinal tray transfer device 45 are connected to two drive motors 47, the lateral tray transfer device 43 and the longitudinal tray transfer device 45 may be driven by a common drive motor 47 as shown in FIG. 6A. In such a case, the toothed belt transmission member 6 of the lateral tray transfer device 43 and the toothed belt transmission member 6 of the longitudinal tray transfer device 45 are disposed perpendicularly to each other. Two power transmission shafts 51 respectively linked to the rotary shafts of the two toothed belt transmission members 6 are disposed, using bearings 52, perpendicularly to each other in an area inward of the two toothed belt transmission members 6. The two power transmission shafts 51 are linked to each other via bevel gears 53 attached to their end portions. In this configuration, the drive motor 47 is operatively linked to the drive pulley 65 included in the toothed transmission belt member 6 of either the lateral tray transfer device 43 or the longitudinal tray transfer device 45. Thus, the toothed transmission members 6 of the lateral tray transfer device 43 and the longitudinal tray transfer device 45 can be rotationally driven, in a manner similar to the above-described, by the single drive motor 47. In the single drive motor configuration, it is possible, by changing the gear ratio between the two bevel gears 53 attached to the two power transmission shafts 51 linked to the lateral tray transfer device 43 and the longitudinal tray transfer device 45, respectively, to make the rotation speed different between the lateral tray transfer device 43 and the longitudinal tray transfer device 45 without differentiating control between them. Generally, when this type of tray transfer mechanism is used, a higher speed is set for longitudinal transfer than for lateral transfer. Such an arrangement can be made by using the bevel gears 53 having different numbers of teeth for the lateral tray transfer device 43 and for the longitudinal tray transfer device 45, respectively, as shown in FIG. 6B.

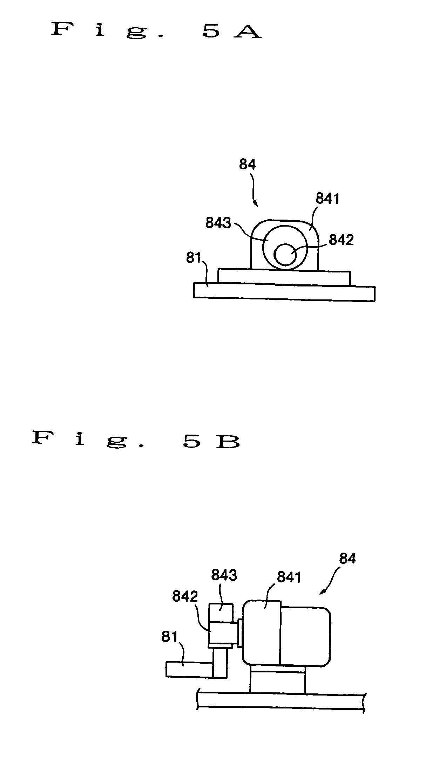

In the tray drive device 4 of the present embodiment, the tray transfer direction switching device 8 is configured as a single switching unit and includes, as shown in FIGS. 2A and 2B : a supporting member 81 on one end of which the lateral tray transfer device 43 is disposed and on the other end of which the longitudinal tray transfer device 45 is disposed; pivotal supporting means 82 which tiltably supports the supporting member 81; elastic supporting means 83 which continuously elastically supports, in one direction, the supporting member 81 such that the toothed belt transmission member 6 of one of the lateral tray transfer device 43 and the longitudinal tray transfer device 45 can engage the corresponding one of the lateral rack 41 and the longitudinal rack 42 of the tray 2; and a press-tilting means 84 which can press and tilt the supporting member 81 in the other direction to allow the toothed belt transmission member 6 of the other one of the lateral tray transfer device 43 and the longitudinal tray transfer device 45 to engage the other one of the lateral rack 41 and the longitudinal rack 42 of the tray 2. The supporting member 81 is made of an approximately rectangular plate. The pivotal supporting means 82 includes a shaft 821 and bearings 822. The shaft 821 is provided at a longitudinally intermediate part of the supporting member 81, the longitudinally intermediate part being closer to the side where the longitudinal tray transfer device 45 is disposed than to the other side of the supporting member 81. The shaft 821 is turnably supported by bearings 822 provided on a horizontally fixed mounting plate 823 so that the supporting member 81 is tiltable. With the supporting member 81 arranged as described above, the lateral tray transfer device 43 is disposed on one end portion of the supporting member 81 such that, in a state where the supporting member 81 is tilted out of its horizontal position with its end toward which the lateral tray transfer device 43 is disposed slightly lifted, the upper surface (surface to engage the lateral rack 41) of the toothed belt transmission member 6 of the lateral tray transfer device 43 is horizontal to be engageable with the lateral rack 41 of the tray 2. The longitudinal tray transfer device 45 is disposed in a similar manner on the side opposite to where the lateral tray transfer device 43 is disposed of the supporting member 81. Namely, the longitudinal tray transfer device 45 is disposed such that, in a state where the supporting member 81 is tilted out of its horizontal position with its end toward which the longitudinal tray transfer device 45 is disposed slightly lifted, the upper surface (surface to engage the longitudinal rack 41) of the toothed belt transmission member 6 of the longitudinal tray transfer device 45 is horizontal to be engageable with the longitudinal rack 42 of the tray 2. The elastic supporting means 83 is made of a plate spring and is disposed between the supporting member 81 and the mounting plate 823. It is positioned such that it continuously pushes up the end, toward which the lateral tray transfer device 43 is disposed, of the supporting member 81 making the toothed belt transmission member 6 of the lateral tray transfer device 43 securely engageable with the lateral rack 41 of the tray 2 and such that it continuously pushes down the other end of the supporting member 81 making the toothed belt transmission member 6 of the longitudinal tray transfer device 45 securely disengageable from the longitudinal rack 42 of the tray 2. The press-tilting means 84 is disposed close to the elastic supporting means 83. The press-tilting means 84 includes, as shown in FIGS. 5A and 5B, a geared motor 841 and an eccentric wheel 843 which is eccentrically fixed to a rotary shaft 842 of the geared motor 841. The press-tilting means 84 is disposed on the supporting member 81 to be longitudinally outward of the lateral tray transfer device 43. The eccentric wheel 843 is positioned to be at a predetermined height above the surface of the end portion where the press-tilting means 84 is disposed of the supporting member 81. It is configured such that it presses down the supporting member 81 when the eccentric wheel 84 is turned. When the supporting member 81 (i.e. its end portion where the press-tilting means 84 is disposed) is pressed down, the lateral tray transfer device 43 that has been engaged with the lateral rack 41 of the tray 2 is shifted from an engaged position to a disengaged position, that is, the lateral tray transfer device 43 is disengaged from the lateral rack 41 of the tray 2. At the same time, the longitudinal tray transfer device 45 that has been disengaged from the longitudinal rack 42 of the tray 2 is shifted from a disengaged position to an engaged position, that is, the longitudinal tray transfer device 45 is engaged with the longitudinal rack 42 of the tray 2. In an alternative configuration, the tray transfer direction switching device 8 may be replaced with two tray transfer direction switching units which respectively control the lateral tray transfer device 43 and the longitudinal tray transfer device 45. In such a case, each of the tray transfer direction switching units can be configured with a supporting member on which a lateral tray transfer device or a longitudinal tray transfer device is disposed, pivotal supporting means which tiltably supports the supporting member, elastic supporting means which continuously elastically supports the supporting member in one direction making the toothed transmission belt engageable with the corresponding rack of the tray, and a press-tilting part which can press and tilt the supporting member in the other direction making the toothed transmission belt disengageable from the corresponding rack of the tray. The tray transfer direction switching unit can be configured with a supporting base which supports a lateral tray transfer device or a longitudinal tray transfer device and an arm and actuator which vertically movably, tiltably, or rotatably support and drive the supporting base. Even in cases where modifications as described above are made, each of the tray transfer direction switching units is preferably provided with elastic supporting means like a plate spring for pressing its toothed belt transmission member toward the corresponding rack of the tray. With the configuration modified as described above, an arrangement can be made such that, when the toothed belt transmission member of one of the lateral tray transfer device and the longitudinal tray transfer device is engaged with the corresponding one of the lateral rack and the longitudinal rack of the tray, the toothed belt transmission member of the other of the lateral tray transfer device and the longitudinal tray transfer device is disengaged from the other one of the lateral rack and the longitudinal rack of the tray. Using the separate tray transfer direction switching units for the lateral and longitudinal tray transfer devices is suitable in cases where the lateral tray transfer device is disposed alone at a specific location for transferring the tray only laterally whereas the longitudinal tray transfer device is disposed alone at another specific location for transferring the tray only longitudinally.

In the tray transfer mechanism 1, the tray transfer direction switching unit 8 is driven as required according to a program stored in advance in control means, not illustrated, to make switching between a state where the toothed belt transmission member 6 of the lateral tray transfer device 43 is engaged with the lateral rack 41 of the tray 2 and another state where the toothed belt transmission member 6 of the longitudinal tray transfer device 45 is engaged with the longitudinal rack 42 of the tray 2. Hence, the tray 2 is transferred laterally or longitudinally as required by the toothed belt transmission member 6 of the lateral tray transfer device 43 or longitudinal tray transfer device 45, so that it can be circulated on a horizontal surface.

The basic operations of the tray transfer mechanism 1 will be described with reference to FIGS. 2A and 2B. When the transfer mechanism 1 is in an initial unoperated state, the tray 2 is in its parking position with its four lateral rollers 31 resting on the four corresponding supporting rollers 35 (see FIG. 7B) provided in portions of the lateral rails 33 and its four longitudinal rollers 32 resting on the four corresponding supporting rollers 36 (see FIG. 7B) provided in portions of the longitudinal rails 34. In this state, the toothed belt transmission member 6 of the lateral tray transfer device 43 is, as described above, engaged with the lateral rack 41 of the tray 2 being supported on the lateral tray transfer device 43. When the tray 2 is in this state, its rollers 31 and 32 are engaged with neither of the position correcting guides 37 and 38 (see FIG. 7A), that is, the tray 2 is released from the position correcting guides 37 and 38. With the timing belt 60 of the toothed belt transmission member 6 of the lateral tray transfer device 43 engaged with the lateral rack 41 on the underside of the tray 2, however, the tray 2 stably stays still being supported by the supporting rollers 35 and 36.

When the lateral tray transfer device 43 is operated by a control program included in control means, not illustrated, causing the toothed belt transmission member 6 of the lateral tray transfer device 43 to be driven in the forward direction, the lateral rack 41 of the tray 2 engaged with the toothed belt transmission member 6 is transferred in the direction in which the toothed belt transmission member 6 is rotating, so that the tray 2 is transferred leftward on the lateral rails 33 (leaving the supporting rollers 35 and 36). At this time, the lateral rack 41 on the underside of the tray 2 and the toothed belt transmission member 6 of the lateral tray transfer device 43 are engaged with each other, so that the tray 2 is transferred straight leftward in stable condition. At this time, it may happen that an article inappropriately placed on the tray 2 subjects the tray 2 to an uneven load thereby causing the tray 2 to tend to deviate from the straight course of transfer. Immediately after starting moving, however, the lateral rollers 31 of the tray 2 are slidingly guided into the straight leftward course of transfer over the lateral rails 33 by the lateral position correcting guides 37 having, relative to the corresponding lateral rails 33, outwardly bent rail end parts in their discontinuous portions (see FIG. 7A), so that the tray 2 is enabled to move straight leftward in stable condition. The tray 2 is thus transferred from its initial parking position toward an adjacent parking position. When the tray 2 reaches about a middle point between the two parking positions, depending on the engagement length of the toothed belt transmission member 6 of the lateral tray transfer device 43 provided at each of the two parking positions relative to the length of the lateral rack 41 of the tray 2, the lateral rack 41 of the tray 2 is engaged with and driven by both the lateral tray transfer device 43 provided at the initial parking position and the lateral tray transfer device 43 provided at the adjacent parking position. As the tray 2 is further transferred leftward, i.e. toward the adjacent parking position, the lateral rack 41 of the tray 2 leaves the lateral tray transfer device 43 provided at the initial parking position to be engaged only with and driven only by the lateral tray transfer device 43 provided at the adjacent parking position. When, in cases where the tray 2 is to be stopped at the adjacent parking position, the tray 2 reaches a predetermined point between the two parking positions, the lateral tray transfer device 43 is slowed down. When the tray 2 subsequently reaches the adjacent parking position and the rollers 31 and 32 of the tray 2 ride on top of the corresponding supporting rollers 35 and 36, the lateral tray transfer device 43 stops thereby stopping the tray 2. At this time, with the lateral rack 41 on the underside of the tray 2 engaged with the toothed belt transmission member 6 of the lateral tray transfer device 43, the rollers 31 and 32 of the tray 2 are securely stopped on the supporting rollers 35 and 36 and the tray 2 is allowed to stably stay in the parking position. When the tray 2 being transferred from its initial parking position is to be further transferred, without stopping at the adjacent parking position, to a next adjacent parking position, it is further transferred, passing the adjacent parking position, toward the next adjacent parking position. When the tray 2 subsequently reaches a predetermined position, the lateral tray transfer device 43 is slowed down in the same manner as described above. When the tray 2 subsequently reaches the next adjacent parking position and its rollers 35 and 36 ride on top of the supporting rollers 35 and 36, the lateral tray transfer device 43 provided at the next adjacent parking position stops thereby allowing the tray 2 to stop and stay at the next adjacent parking position in stable condition.

Conversely, when the lateral tray transfer device 43 is operated to backwardly drive its toothed belt transmission member 6, the lateral rack 41 of the tray 2 engaged with the toothed belt transmission member 6 is transferred in the direction in which the toothed belt transmission member 6 is rotating, so that the tray 2 is transferred rightward on the lateral rails 33 (leaving the supporting rollers 35 and 36) . In this case, too, like in the above case in which the tray 2 is transferred leftward, the tray 2 is stably transferred to a predetermined position and securely stopped there.

When, in other cases, the tray transfer direction switching unit 8 provided at an initial parking position for the tray 2 is operated by a control program included in control means, not illustrated, driving the drive motor 841 included in the press-tilting means 84 and thereby turning the eccentric wheel 843, the supporting member 81 (i.e. its end portion where the press-tilting means 84 is disposed) is pressed down by the eccentric wheel 843. As a result, the lateral tray transfer device 43 that has been engaged with the lateral rack 41 of the tray 2 is shifted from an engaged position to a disengaged position, that is, the lateral tray transfer device 43 is disengaged from the lateral rack 41 of the tray 2. At the same time, the longitudinal tray transfer device 45 that has been disengaged from the longitudinal rack 42 of the tray 2 is shifted from a disengaged position to an engaged position, that is, the longitudinal tray transfer device 45 is engaged with the longitudinal rack 42 of the tray 2. When, in this state, the longitudinal tray transfer device 45 is operated to forwardly drive its toothed belt transmission member 6, the tray 2 is transferred forward on the longitudinal rails 34 (leaving the supporting rollers 35 and 36). At this time, the longitudinal rack 42 on the underside of the tray 2 and the toothed belt transmission member 6 of the longitudinal tray transfer device 45 are engaged with each other, so that the tray 2 is transferred straight forward in stable condition. At this time, it may happen that an article inappropriately placed on the tray 2 subjects the tray 2 to an uneven load thereby causing the tray 2 to tend to deviate from the straight course of transfer. Immediately after starting moving, however, the longitudinal rollers 32 of the tray 2 are slidingly guided into the straight forward course of transfer over the longitudinal rails 34 by the longitudinal position correcting guides 38 having, relative to the corresponding longitudinal rails 34, outwardly bent rail end parts in their discontinuous portions (see FIG. 7A), so that the tray 2 is enabled to move straight forward in stable condition. The tray 2 is thus transferred from its initial parking position toward an adjacent parking position. When the tray 2 reaches about a middle point between the two parking positions, depending on the engagement length of the toothed belt transmission member 6 of the longitudinal tray transfer device 45 provided at each of the two parking positions relative to the length of the longitudinal rack 42 of the tray 2, the longitudinal rack 42 of the tray 2 is engaged with and driven by both the longitudinal tray transfer device 45 provided at the initial parking position and the longitudinal tray transfer device 43 provided at the adjacent parking position. As the tray 2 is further transferred forward, i.e. toward the adjacent parking position, the longitudinal rack 42 of the tray 2 leaves the longitudinal tray transfer device 45 provided at the initial parking position to be engaged only with and driven only by the longitudinal tray transfer device 45 provided at the adjacent parking position. When, in cases where the tray 2 is to be stopped at the adjacent parking position, the tray 2 reaches a predetermined point between the two parking positions, the longitudinal tray transfer device 45 is slowed down. When the tray 2 subsequently reaches the adjacent parking position and the rollers 31 and 32 of the tray 2 ride on top of the corresponding supporting rollers 35 and 36, the longitudinal tray transfer device 45 stops thereby stopping the tray 2. At this time, with the longitudinal rack 42 on the underside of the tray 2 engaged with the toothed belt transmission member 6 of the longitudinal tray transfer device 45 provided at the adjacent parking position, the rollers 31 and 32 of the tray 2 securely stop on the supporting rollers 35 and 36 and the tray 2 is allowed to stably stay in the parking position. When the tray 2 being transferred from its initial parking position is to be further transferred, without stopping at the adjacent parking position, to a next adjacent parking position, it is further transferred, passing the adjacent parking position, toward the next adjacent parking position. When the tray 2 subsequently reaches a predetermined position, the longitudinal tray transfer device 45 is slowed down in the same manner as described above. When the tray 2 subsequently reaches the next adjacent parking position and its rollers 31 and 32 ride on top of the supporting rollers 35 and 36, the longitudinal tray transfer device 45 stops thereby allowing the tray 2 to stop and stay at the next adjacent parking position in stable condition.

Conversely, when the longitudinal tray transfer device 45 is operated to backwardly drive its toothed belt transmission member 6, the longitudinal rack 42 of the tray 2 engaged with the toothed belt transmission member 6 is transferred in the direction in which the toothed belt transmission member 6 is rotating, so that the tray 2 is transferred backward on the longitudinal rails 34 (leaving the supporting rollers 35 and 36) . In this case, too, like in the above case in which the tray 2 is transferred forward, the tray 2 is stably transferred to a predetermined position and securely stopped there.

The tray transfer mechanism 1 that is capable of the above four basic operations can be operated in various operation patterns arranged by arbitrarily selectively combining the four basic operations. The tray 2 can, therefore, be driven and transferred laterally and longitudinally along the tray transfer routes arbitrarily arranged using the lateral rails 33 and longitudinal rails 34. For example, the tray transfer mechanism 2 can transfer trays in the same patterns as used in existing parking systems such as planar (or horizontal) circulation parking systems or puzzle-type planar circulation parking systems.

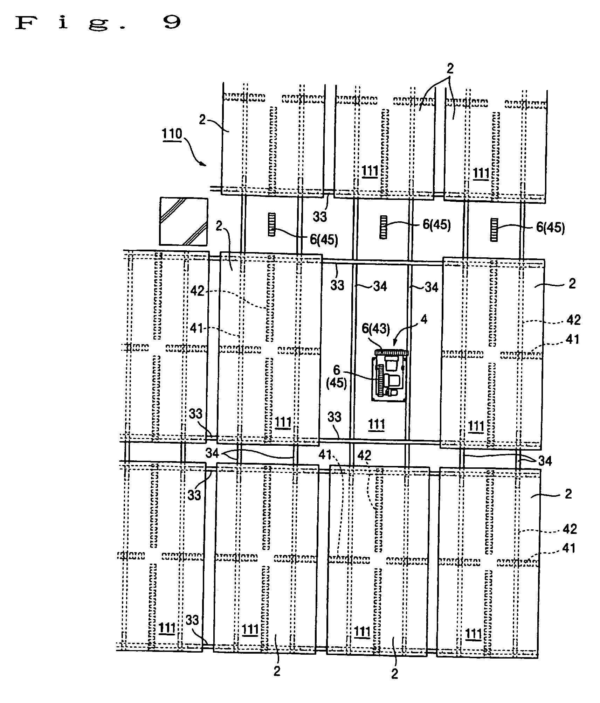

As an example of an article storing system using the tray transfer mechanism 1, a puzzle-type planar circulation parking system as shown in FIG. 9 will be described below. Referring to FIG. 9, plural lateral rails 33 and longitudinal rails 34 are selectively laid in a matrix formation in a parking space 110 at a car storage level, the plural lateral rails 33 and longitudinal rails 34 forming plural storage partitions 111 (equivalent to the tray parking positions referred to above). Of these storage partitions 111, at least one storage partition 111 is kept empty (no tray 2 is placed there) with a tray 2 placed in each of the other storage partitions 111. A tray drive device 4 as described above is provided in each of the storage partitions 111 or in each of selected ones of the storage partitions 111 formed in the parking space 110. When the storage partitions 111 include those which each require the tray 2 to move only laterally or only longitudinally, each of such storage partitions 111 requires to be provided with either one of the lateral tray transfer device 43 for transferring the trays 2 laterally or the longitudinal tray transfer device 45 for transferring the trays 2 longitudinally. The tray 2 and the tray drive device 4 are configured as described in the foregoing.

The planar circulation parking system being described includes a lift, not illustrated, provided between a car loading/unloading floor and a car storage level. The platform of the lift is provided with lateral and longitudinal rails adjacently to the lifting passage for the lift at the car storage level, the lateral and longitudinal rails being linkable to the lateral rails 33 and longitudinal rails 34 laid through the storage partitions 111. The platform is also provided with a tray drive device which can engage with the lateral rack 41 and longitudinal rack 42 attached to the underside of each tray 2.

In this parking system, cars are loaded and unloaded under control by a program stored in advance in control means, not illustrated. When loading or unloading a car, the tray or trays 2 at one or more storage partitions 111 each adjacent to an empty partition of the parking space 110 are each driven and transferred toward the empty partition.

This takes place, as described in the foregoing, when the lateral tray transfer device 43 or longitudinal tray transfer device 45 at each of the storage partitions where the trays 2 to be transferred are parked is operated thereby rotating, forward or backward, the toothed belt transmission member 6 of the lateral tray transfer device 43 engaged with the lateral rack of the tray 2 parked at the storage partition or the toothed belt transmission member 6 of the longitudinal tray transfer device 45 engaged with the longitudinal rack of the tray 2 at the storage partition. When the lateral tray transfer device 43 or longitudinal tray transfer device 45 is rotated forward or backward at the storage partition, the tray 2 parked at the storage partition with its lateral rack 41 or longitudinal rack 42 engaged with the toothed belt transmission member 6 of the lateral tray transfer device 43 or longitudinal tray transfer device 45 is transferred leftward, rightward, forward, or backward along the lateral rails 33 or longitudinal rails 34 toward the empty partition. In this way, each of the trays 2 to be transferred is moved from the storage partition 111 where it is initially positioned toward a specified storage partition 111. When it reaches the specified storage partition, the lateral tray transfer device 43 or longitudinal tray transfer device 45 at the specified storage partition stops thereby stopping the tray 2 at the parking position of the specified storage partition.

As laterally or longitudinally transferring the tray or trays 2 toward empty partitions is repeated, the tray or trays 2 are circulated on the horizontal surface (puzzle circulation), so that the tray 2 to be loaded or unloaded can be transferred to the lift. When the tray 2 to be loaded or unloaded is placed on the platform of the lift, the platform is lifted or lowered to the car loading/unloading floor where the car is loaded or unloaded.

As described above, in the tray transfer mechanism 1, the tray transfer direction switching device 8 makes switching to cause the lateral rack 41 of the tray 2 to be engaged with the toothed belt transmission member 6 of the lateral tray transfer device 43 so that driving the lateral tray transfer device 43 transfers the tray 2 laterally or to cause the longitudinal rack 42 of the tray 2 to be engaged with the toothed belt transmission member 6 of the longitudinal tray transfer device 45 so that driving the longitudinal tray transfer device 45 transfers the tray 2 longitudinally. Thus, the tray transfer mechanism 1 does not require parts which are, in an existing tray transfer mechanism, required to swivel a tray drive device. This largely reduces the number of parts required for the tray transfer mechanism 1, so that the production process and installation adjustment for the tray transfer mechanism 1 can be simplified to realize a large cost reduction. Also, in the tray transfer device 1, to laterally transfer the tray 2, the lateral tray transfer device 43 is driven with its toothed belt transmission member 6 engaged with the lateral rack 41 of the tray 2 and, to longitudinally transfer the tray 2, the longitudinal tray transfer device 45 is driven with its toothed belt transmission member 6 engaged with the longitudinal rack 42 of the tray 2. Thus, the direction of transfer of the tray 2 can be easily changed by 90 degrees, so that the tray transfer operation can be carried out smoothly. In the tray transfer mechanism 1, the driving rotation of the toothed belt transmission member 6 of the lateral tray transfer device 43 or longitudinal tray transfer device 45 is conveyed to the lateral rack 41 or longitudinal rack 42 of the tray 2 by engagement between the teeth of the toothed belt transmission member 6 and the teeth of the lateral rack 41 or longitudinal rack 42. Since the engagement between their teeth involves no slipping and no undesired changes in the tray transfer speed, the tray 2 can be accurately transferred to a predetermined parking position and stopped there.

The tray transfer mechanism 1 is provided with the lateral and longitudinal position correcting guides 37 and 38 that can correct the position of the tray 2 being transferred laterally or longitudinally. Therefore, even when the tray 2 is not accurately stopped at a destination parking position, the tray 2 can be easily brought into the correct transfer route. The lateral and longitudinal position correcting guides 37 and 38 are simply configured with rail members laid along the lateral rails 33 and longitudinal rails 34, or they are simply configured with roller members which are provided on one of the underside of the tray 2 and the horizontal surface for storing or transferring articles and corresponding rail members which are provided on the other of the underside of the tray 2 and the horizontal surface for storing or transferring articles. They can therefore be manufactured and installed at low cost, making it possible to reduce the total cost of the tray transfer mechanism 2.

In the tray transfer mechanism 1, the lateral rack 41 of the tray 2 extends, on the underside of the tray 2, approximately from side to side. The longitudinal rack 42 of the tray 2 extends, on the underside of the tray 2, approximately from end to end. Both the lateral rack 41 and the longitudinal rack 42 are partly cut out to be discontinuous where they would cross each other should they be continuous. Regarding the lengths of the lateral rack 41 and the longitudinal rack 42, it is only required that the total length of engagement between the toothed belt transmission member 6 of the lateral tray transfer device 43 or longitudinal tray transfer device 45 and the lateral rack 41 or longitudinal rack 42 of the tray 2 be not shorter than a quarter of the distance between two trays 2 adjacent in the lateral or longitudinal direction, correspondingly. This facilitates making the lateral tray transfer device 43 and the longitudinal tray transfer device 45 of each tray 2 smaller and enables each tray 2 to be easily placed at a parking position. As mentioned in the foregoing, using a common drive motor for the lateral tray transfer device 43 and longitudinal tray transfer device 45 can further reduce the space required for installation.

In the tray transfer mechanism 1, the lateral tray transfer device 43 and the longitudinal tray transfer device 45 are provided with the plate springs 50 as elastic supporting means for pressing their toothed belt transmission members 6 to the lateral rack 41 and longitudinal rack 42 of the tray 2, respectively, so that the toothed transmission members 6 of the lateral tray transfer device 43 and longitudinal tray transfer device 45 can be securely engaged with the lateral rack 41 and longitudinal rack 42 of the tray 2, respectively. This allows the tray 2 to be securely supported on the lateral tray transfer device 43 and longitudinal tray transfer device 45.

The tray transfer mechanism 1 is provided with the tray transfer direction switching device 8 that is configured with a plate, a shaft, bearings, a plate spring, a geared motor, and an eccentric wheel as a simple common direction switching unit for the lateral tray transfer device 43 and longitudinal tray transfer device 45. The tray transfer direction switching device 8 having such a simple configuration can be manufactured and installed at low cost, making it possible to reduce the total cost of the tray transfer mechanism 1.

The toothed belt transmission members 6 included in the lateral tray transfer device 43 and longitudinal tray transfer device 45 each include the timing belt 60 having teeth formed on its outer and inner sides, and three pulleys, i.e. the two pulleys 63 and the single pulley 65. Each of the toothed belt transmission members 6 is assembled as a single unit to the frame 67. The toothed belt transmission members 6 each having such a simple configuration can be manufactured and installed at low cost, making it possible to reduce the total cost of the tray transfer mechanism 1.

When the tray transfer mechanism 1 is applied to a puzzle-type planar circulation parking system, parts which used to be required to swivel a tray drive device are no longer required, so that the number of parts of the puzzle-type planar circulation parking system can be largely reduced and so that the production process and installation adjustment for the system can be simplified to realize a large cost reduction. In the tray transfer mechanism 1, the tray transfer direction switching device 8 makes switching to cause the lateral rack 41 of the tray 2 to be engaged with the toothed belt transmission member 6 of the lateral tray transfer device 43 so that driving the lateral tray transfer device 43 transfers the tray 2 laterally or to cause the longitudinal rack 42 of the tray 2 to be engaged with the toothed belt transmission member 6 of the longitudinal tray transfer device 45 so that driving the longitudinal tray transfer device 45 transfers the tray 2 longitudinally. In this way, the direction of tray transfer can be easily changed by 90 degrees without requiring an operation step which used to be required to swivel the tray drive device by 90 degrees. The tray can therefore be securely and smoothly transferred. Thus, the tray transfer device 1 can speed up the loading/unloading operation particularly in a planar circulation parking system to largely reduce the waiting time of users.

Even though, in the present embodiment, the tray transfer mechanism 1 is applied to a puzzle-type planar circulation parking system, effects similar to those described above can be obtained also by applying the tray transfer mechanism 1 to a planar (or horizontal) circulation parking system other than of a puzzle type. The application of the tray transfer mechanism 1 is not limited to a planar circulation parking system. It can also be installed where trays are subjected to planar circulation or puzzle circulation in various mechanical parking systems of, for example, a horizontal circulation type, a (single row or plural row) planar reciprocation type, or an elevator type. When used in such mechanical parking systems, too, the tray transfer mechanism 1 allows effects similar to those described above to be obtained. Furthermore, the tray transfer mechanism 1 can also be used in various types of automated warehousing systems for storing various articles.

## Claims

1. A tray transfer mechanism, comprising a plurality of trays on each of which an article can be placed and a tray drive device which stores or transfers the trays on a plane, the tray transfer mechanism circulating the trays on the plane,
wherein each of the trays is provided with a laterally extending rack and a longitudinally extending rack;
the tray drive device includes a lateral tray transfer device having a toothed belt transmission member which, engaging the laterally extending rack of each of the trays, laterally drives the tray, a longitudinal tray transfer device having a toothed belt transmission member which, engaging the longitudinally extending rack of each of the trays, longitudinally drives the tray, and a tray transfer direction switching device which alternately performs an operation to switch the lateral tray transfer device between an engageable position where the toothed belt transmission member of the lateral tray transfer device can engage the laterally extending rack of each of the trays and a disengageable position where the toothed belt transmission member of the lateral tray transfer device can disengage from the laterally extending rack of each of the trays and another operation to switch the longitudinal tray transfer device between an engageable position where the toothed belt transmission member of the longitudinal tray transfer device can engage the longitudinally extending rack of each of the trays and a disengageable position where the toothed belt transmission member of the longitudinal tray transfer device can disengage from the longitudinally extending rack of each of the trays; and
each of the trays is driven laterally or longitudinally by engaging selectively the laterally extending rack of each of the trays with the lateral tray transfer device or the longitudinally extending rack of each of the trays with the longitudinal tray transfer device.

2. The tray transfer mechanism according to claim 1, wherein each of the lateral tray transfer device and the longitudinal tray transfer device is provided with elastic supporting means which elastically supports the toothed belt transmission member thereof toward the laterally extending rack or longitudinally extending rack of each of the trays.

3. The tray transfer mechanism according to claim 1, wherein the tray transfer direction switching device is configured as a single switching unit including: a supporting member on a first end portion of which the lateral tray transfer device is disposed and on a second end portion of which the longitudinal tray transfer device is disposed; pivotal supporting means which tiltably supports the supporting member; elastic supporting means which continuously elastically supports, in a first direction, the supporting member such that the toothed belt transmission member of one of the lateral tray transfer device and the longitudinal tray transfer device can engage one of the laterally extending rack and the longitudinally extending rack of each of the trays; and press-tilting means which can press and tilt the supporting member in a second direction to allow the toothed belt transmission member of the other of the lateral tray transfer device and the longitudinal tray transfer device to engage the other of the laterally extending rack and the longitudinally extending rack of each of the trays.

4. The tray transfer mechanism according to claim 3, wherein the press-tilting means includes a drive motor and an eccentric wheel eccentrically fixed to a rotary shaft of the drive motor.

5. The tray transfer mechanism according to claim 1, wherein the tray transfer direction switching device includes separate switching units for the lateral tray transfer device and the longitudinal tray transfer device, the separate switching units being arranged such that, when the toothed belt transmission member of one of the lateral tray transfer device and the longitudinal tray transfer device is engaged with one of the laterally extending rack and the longitudinally extending rack of each of the trays, the toothed belt transmission member of the other of the lateral tray transfer device and the longitudinal tray transfer device is disengaged from the other of the laterally extending rack and the longitudinally extending rack.

6. An article storing apparatus using the tray transfer mechanism according to one of claims 1 to 5, wherein a plurality of trays arranged in a matrix formation including a plurality of partitions are circulated on a plane, the plurality of partitions including at least one empty partition.
